# EUROPÄISCHE PATENTSCHRIFT

(11) **EP 2 436 960 B1**
(45) Veröffentlichungstag und Bekanntmachung des Hinweises auf die Patenterteilung: **06.01.2016**
(21) Anmeldenummer: 11006368.2
(22) Anmeldetag: 03.08.2011
(51) Int. Cl.: F16K 15/02, F16J 15/04, F16J 15/10, F15B 13/02

(54) **Dichtbuchsenanordnung und hydraulisches Gerät**
Sealing bushing assembly and hydraulic device
Agencement de douille d'étanchéité et appareil hydraulique

(30) Priorität: 29.09.2010 DE 102010046929
(43) Veröffentlichungstag der Anmeldung: 04.04.2012
(73) Patentinhaber: ROBERT BOSCH GMBH, 70469 Stuttgart (DE)
(72) Erfinder: Schmitt, Bernd, 97848 Rechtenbach (DE)
(74) Vertreter: Thürer, Andreas

(56) Entgegenhaltungen:
- DE-A1- 10 028 398
- DE-A1-102004 058 302
- DE-U1-202007 005 375
- JP-A- 11 280 905
- US-A- 6 009 611

## Beschreibung

Die Erfindung betrifft eine Dichtbuchsenanordnung gemäß dem Oberbegriff des Patentanspruches 1 und ein mit einer derartigen Dichtbuchsenanordnung ausgeführtes hydraulisches Gerät oder Ventil.

Rückschlagventile haben üblicherweise einen metallischen Schließkörper, der über eine Feder gegen einen Ventilsitz vorgespannt ist. Diese Feder stützt sich rückseitig an einer Dichtbuchse ab, die in einen Druckmittelströmungspfad eines Gehäuses des Rückschlagventils eingesetzt ist. Üblicherweise ist diese Dichtbuchse bei den bekannten Lösungen ebenfalls aus Metall hergestellt und trägt einen Dichtring, über den eine Leckage entlang des Außenumfangs der Dichtbuchse verhindert ist.

Eine derartige Dichtbuchse ist relativ aufwendig zu fertigen, da sie spanend aus Metall hergestellt werden muss und der Dichtring als separates Bauteil auf den Außenumfang aufgesetzt wird.

Zur Überwindung dieses Nachteils wird in der DE 10 2004 058 302 A1 eine aus Kunststoff hergestellte Dichtbuchse offenbart, bei der stirnseitig eine umlaufende Erhöhung vorgesehen ist, die dichtend an einer Schulter des Druckmittelströmungskanals liegt. Die gegenüberliegende Stirnseite der Dichtbuchse liegt auf einer Anlageschulter des Gehäuses auf. Die Dichtbuchse ist in Axialrichtung mit Vorspannung im Gehäuse aufgenommen. Darüber hinaus ist auch der Außendurchmesser der Dichtbuchse etwas größer als der entsprechende Durchmesser des Druckmittelkanals ausgeführt, so dass die Dichtbuchse auch in Radialrichtung mit Presspassung lagefixiert ist.

Bei einer derartigen Konstruktion kann auf einen gesonderten Dichtring verzichtet werden, so dass der fertigungstechnische Aufwand und der Montageaufwand gegenüber den herkömmlichen Lösungen verringert ist. Es zeigte sich jedoch, dass die Dichtung bei vergleichsweise großen Druckmittelkanälen nicht hinreichend ist.

Die DE 20 2007 005 375 U1 offenbart einen Sensor mit einem axial wirksamen Dichtungssystem.

Demgegenüber liegt der Erfindung die Aufgabe zugrunde, eine Dichtbuchsenanordnung und ein hydraulisches Gerät oder Ventil zu schaffen, bei denen die Dichtigkeit mit minimalem vorrichtungstechnischen Aufwand verbessert ist.

Diese Aufgabe wird im Hinblick auf die Dichtbuchsenanordnung durch die Merkmalskombination des Patentanspruches 1 und im Hinblick auf das hydraulische Gerät oder Ventil durch die Merkmalskombination des Patentanspruches 7 gelöst.

Vorteilhafte Weiterbildungen der Erfindung sind Gegenstand der Unteransprüche.

Erfindungsgemäß hat die Dichtbuchsenanordnung eine Dichtbuchse, die in einen Druckmittelkanal eingesetzt ist, der in einem Gehäuse ausgebildet ist. An einer Stirnseite der Dichtbuchse ist eine in Axialrichtung vorstehende ringförmige Erhöhung ausgebildet, die in dichtender Anlage an eine Axialschulter des Gehäuses steht. Eine gegenüberliegende Stirnseite der Dichtbuchse liegt dichtend an einer Anlageschulter des Gehäuses an. Erfindungsgemäß ist diese Anlageschulter mit einer umlaufenden Dichtkante ausgebildet, entlang der die Dichtbuchse mit Vorspannung an einer schräg angestellten Ringdichtfläche anliegt.

Bei dieser Konstruktion wird die beim Stand der Technik gemäß der DE 10 2004 058 302 A1 im Bereich der gehäuseseitigen Stirnfläche ausgebildete Radialdichtung entlang des Außenumfangs der Dichtbuchse ersetzt durch eine axial wirkende Dichtung mit Kreisliniensitz. Durch die Realisierung dieser axialen Dichtung kann die umfangsseitige Presspassung zwischen Dichtbuchse und Umfangswandung des Druckmittelkanals mit geringerer Pressung ausgeführt werden, ohne Nachteile mit Bezug auf die Dichtigkeit zu befürchten. Durch die verringerte Pressung wird auch die Montage/Demontage aufgrund der Reduzierung der radialen Reibkräfte gegenüber den herkömmlichen Lösungen vereinfacht. Durch die etwa linienförmige Anlage der Ringdichtfläche an der umlaufenden Dichtkante kann auch die in Axialrichtung wirksame Vorspannung gegenüber dem eingangs beschriebenen Stand der Technik verringert werden, bei dem die gehäuseseitige Stirnfläche in etwa flächig auf der Stützschulter aufliegt.

Bei einem bevorzugten Ausführungsbeispiel der Erfindung schließt sich umfangsseitig an die Ringdichtfläche eine umlaufende Einführfase ein. Diese erleichtert das Einsetzen der Dichtbuchse in den Druckmittelkanal, so dass der Montageaufwand weiter verringert ist.

Erfindungsgemäß liegt die Dichtbuchse mit Vorspannung an der Anlageschulter an. Diese Vorspannung kann so gewählt sein, dass die Ringdichtfläche und/oder die umlaufende Dichtkante deformiert werden, so dass die Dichtwirkung weiter optimiert ist.

Die radiale Abdichtung kann verbessert werden, indem ein sich an die Einführfase anschließender Umfangswandungsabschnitt schräg gegenüber der gehäuseseitigen Umfangswandung angestellt ist, so dass auch radial eine linienartige Abdichtung vorliegt.

Bei besonders hohen Anforderungen an die Dichtigkeit kann an der mit der Erhöhung ausgeführten Stirnseite der Dichtbuchse ein Dichtring vorgesehen werden, der die Dichtbuchse gemeinsam mit der Erhöhung stirnseitig abdichtet. In diesem Fall kann die Relativposition von Ringdichtfläche und Dichtkante so ausgelegt sein, dass der Kreisliniensitz in etwa in Axialrichtung mit diesem Dichtring fluchtet.

Bei einem Ausführungsbeispiel der Erfindung ist die Radialerstreckung der Ringdichtfläche größer als die Radialerstreckung der Einführfase.

Erfindungsgemäß ist die Dichtbuchse aus einem Kunststoffmaterial, beispielsweise durch Spritzgießen hergestellt ist.

Ein bevorzugtes Ausführungsbeispiel der Erfindung wird im Folgenden anhand schematischer Zeichnungen näher erläutert. Es zeigen:
Figure 1 einen Längsschnitt durch ein hydraulisches Gerät mit einem Rückschlagventil;
Figur 2 eine Einzeldarstellung einer Dichtbuchse des hydraulischen Gerätes gemäß Figur 1 und
Figur 3 eine Detaildarstellung der Dichtbuchse gemäß Figur 2.

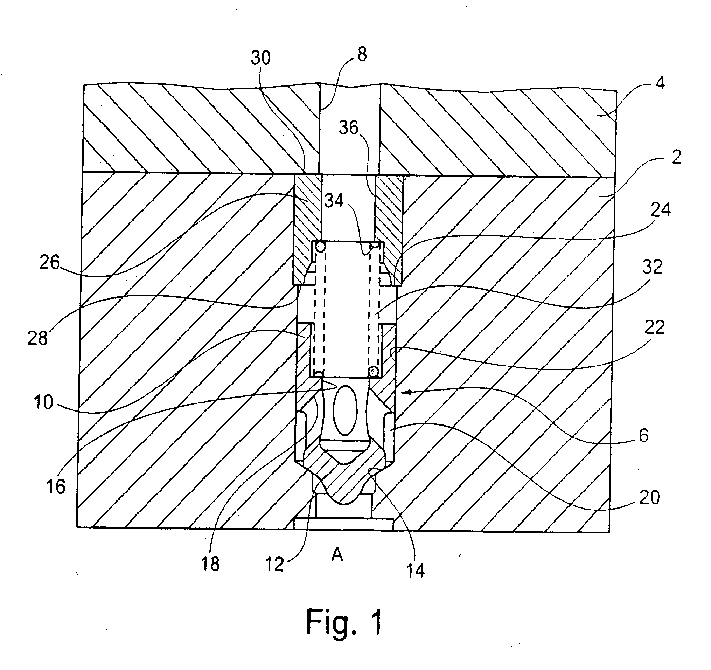

Figur 1 zeigt eine geschnittene Teildarstellung eines hydraulischen Gerätes, beispielsweise eines Mobilsteuerblocks 1 der in Plattenbauweise ausgeführt ist und eine Platte 2 hat, der eine Gegenplatte 4 zugeordnet ist. In die Platte 2 ist ein Rückschlagventil 6 eingesetzt, das in seiner gezeigten Sperrstellung den Druckmittelströmungspfad zwischen einem Eingangsanschluss A und einem in der Gegenplatte 4 ausgebildeten Ausgangskanal 8 absperrt und in der Öffnungsstellung diese Verbindung aufsteuert.

Das Rückschlagventil 6 hat einen Schließkörper 10, der mit einem Kegel 12 gegen einen entsprechend ausgebildeten Ventilsitz 14 vorgespannt ist. Der Schließkörper 10 ist als Hohlkolben ausgeführt, wobei eine Innenbohrung 16 über Schrägkanäle 18 in einem Ringraum 20 mündet, der durch eine Vielzahl von Taschen am Außenumfang des Schließkörpers 10 ausgebildet ist, wobei jeweils eine der Schrägbohrungen 18 in einer Tasche mündet. Der Grundaufbau eines derartigen Schließkörpers 10 ist in der nachveröffentlichten Patentanmeldung DE 103 16 230 beschrieben.

Der kegelige Ventilsitz 14 ist als Radialschulter einer Ventilbohrung 22 ausgebildet, in der der Schließkörper 10 axial verschiebbar geführt ist. Diese Ventilbohrung 22 mündet einerseits in dem Anschluss A und andererseits in dem Ausgangskanal 8 der Gegenplatte 4. Die Ventilbohrung 22 ist zum Ausgangskanal 8 hin über eine Anlageschulter 24 erweitert. In den erweiterten Bereich ist eine Dichtbuchse 26 eingesetzt, die mit ihrem Außenumfang dichtend an der Umfangswandung der Ventilbohrung 22 anliegt und mit ihrer in Figur 1 unten liegenden vorderen Stirnfläche 28 an der Anlageschulter 24 und mit ihrer rückseitigen Stirnfläche 30 (oben in Figur 1) an der Gegenplatte 4 abgestützt ist. Bei dem dargestellten Ausführungsbeispiel sind der Außendurchmesser und die Axiallänge der Dichtbuchse 26 etwas größer als der Durchmesser des axial erweiterten Teils der Ventilbohrung 22 bzw. der Axialabstand zwischen der Anlagefläche der Gegenplatte 4 und der Anlageschulter 24 ausgebildet, so dass die Dichtbuchse 26 mit Presspassung eingesetzt ist.

Beim dargestellten Ausführungsbeispiel wirkt die Dichtbuchse 26 als Federteller, wobei eine den Schließkörper 10 gegen den Ventilsitz 14 vorspannende Feder 32 an einer Radialschulter 34 einer Dichtbuchsenbohrung 36 abgestützt ist.

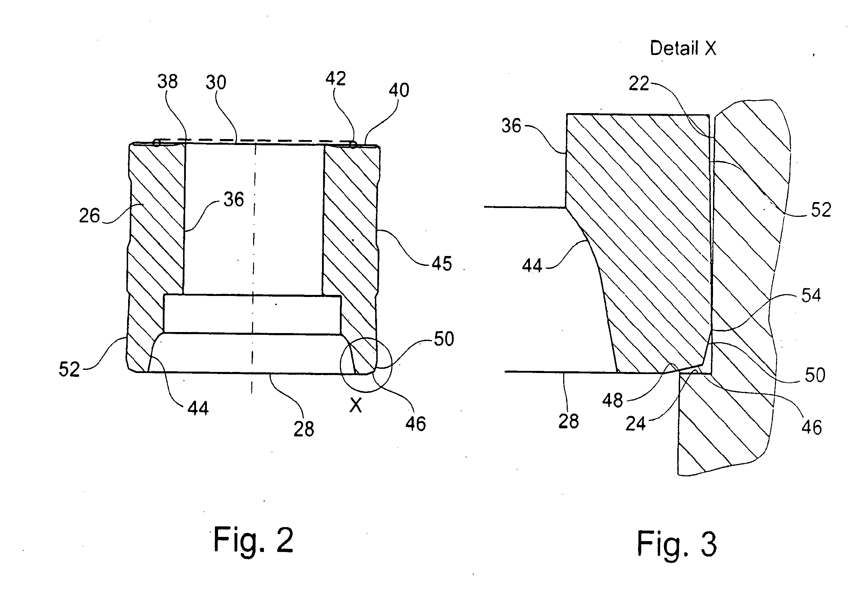

Einzelheiten der Dichtbuchse 26 werden anhand der Figuren 2 und 3 erläutert. Der prinzipielle Aufbau der Dichtbuchse 26 entspricht demjenigen der Dichtbuchse aus der DE 10 2004 058 302 A1, so dass hier zur Vermeidung von Wiederholungen unter Bezugnahme auf diese Patentanmeldung lediglich die zum Verständnis der Erfindung wesentlichen Bauelemente erläutert werden.

Demgemäß ist an der rückseitigen Stirnfläche 30 der Dichtbuchse eine innenumfangsseitige Erhöhung 38 ausgebildet, entlang der die Dichtbuchse 26 an der Gegenplatte 4 anliegt. Radial außerhalb dieser Erhöhung 38 ist - wie in der DE 10 2004 058 302 A1 ausführlich erläutert - eine ebenfalls umlaufende Dichtrippe 40 ausgebildet, die die axiale Abdichtung weiter verbessert. In den Stirnflächenbereich zwischen der Erhöhung 38 und der Dichtrippe 40 kann zur Verbesserung der Abdichtung ein Dichtring 42 angeordnet sein.

Die Dichtbuchsenbohrung 36 ist stufenförmig zur vorderen Stirnfläche 28 hin erweitert, wobei die Erweiterung im Bereich der Stirnfläche 28 in etwa als kuppelförmiger Abschnitt 44 ausgebildet ist.

Figur 3 zeigt das Detail X in Figur 2, wobei auch die Umfangswandung der Ventilbohrung 22 abschnittsweise dargestellt ist. Man erkennt in dieser vergrößerten Darstellung deutlich, dass an der Außenumfangskante der Stirnfläche 28 eine schräg angestellte Ringdichtfläche 46 ausgebildet ist, die bei montierter Dichtbuchse 26 an einer Dichtkante 48 der Anlageschulter 24 anliegt. Der Anstellwinkel der Ringdichtfläche 46 beträgt beim dargestellten Ausführungsbeispiel deutlich weniger als 45° mit Bezug zur Radialebene.

Umfangsseitig schließt sich bei dem dargestellten Ausführungsbeispiel eine Einführfase 50 an, die ebenfalls schräg angestellt ist, wobei der Anstellwinkel zur Radialebene jedoch steiler als derjenige der Ringdichtfläche 46 ist. Dementsprechend ist die Radialerstreckung der Ringdichtfläche 46 größer als die Radialerstreckung der Einführschräge 50. Diese Einführschräge 50 erleichtert das Einsetzen und Einpressen der Einführfase 50. Diese Einführfase 50 erleichtert das Einsetzen und Einpressen der Dichtbuchse 26 in den Druckmittelkanal, der beim konkreten Ausführungsbeispiel abschnittsweise durch die gestufte Ventilbohrung 22 der Platte 2 gebildet ist.

Die Umfangswandung der Ventilbohrung 22 verläuft bei dem Ausführungsbeispiel gemäß den Figuren 2 und 3 im Wesentlichen in zylindrisch. Demgegenüber ist ein an die Stirnfläche 28 angrenzender Außenumfangsabschnitt 52 der Dichtbuchse 26 konisch, sich in Richtung zur Stirnfläche 28 hin erweiternd ausgeführt, so dass die Dichtbuchse 26 an diesem Endabschnitt entlang der durch den schräg angestellten Außenumfangsabschnitt 52 und die Einführfase 50 gebildete Kante 54 an der Umfangswandung der Ventilbohrung 52 anliegt und somit eine linienförmige Radialdichtung bildet. Durch die Kombination dieser radialen Abdichtung und der axialen Abdichtung über die Ringdichtfläche 46 und die Dichtkante 48 ist die Abdichtung gegenüber dem in der DE 10 2004 058 302 A1 gezeigten Ausführungsbeispiel wesentlich verbessert. Durch die vorbeschriebene Radialabdichtung kann die Presspassung zwischen Dichtbuchse 26 und Ventilbohrung 22 mit etwas geringerem Übermaß ausgeführt sein, so dass die Montage wesentlich vereinfacht ist. Auch die in Axialrichtung über die Gegenplatte 4 aufgebrachten Axialkräfte können geringer als beim Stand der Technik ausgelegt werden, da die Flächenpressung bei der linienförmigen Anlage der Ringdichtfläche 46 bei gleicher Vorspannung wesentlich größer ist. Wie bereits erwähnt, ist die axiale Vorspannung beim Einbau der Dichtbuchse 26 so gewählt, dass die Dichtkante 48 oder die Ringdichtfläche 46 leicht deformiert wird, um die Abdichtung zu verbessern. Diese Deformation wird durch die hohe Flächenpressung im Anlagebereich der Ringdichtfläche 46 an die Dichtkante 48 unterstützt.

Am Außenumfang der Dichtbuchse 26 ist eine Ringnut 45 ausgeführt. Diese trägt dazu bei, dass beim Schrumpfen die Maßhaltigkeit der an die Innenumfangswandung der Ventilbohrung 22 anliegende Bereiche der Dichtbuchse nur wenig beeinflusst wird. Des Weiteren ist durch diese Ringnut 45 auch die Dichtigkeit im Außenumfangsbereich verbessert und das Einpressen der Dichtbuchse 26 in die Ventilbohrung 22 vereinfacht.

Bei dem zuvor beschriebenen Ausführungsbeispiel ist die Dichtbuchse 26 Teil eines als Einbauventil ausgeführten Rückschlagventils. Selbstverständlich können derartige Dichtbuchsen auch bei anderen Konstruktionen angewendet werden, bei denen es auf eine gute axiale und radiale Abdichtung bei geringem vorrichtungstechnischen Aufwand ankommt. Bevorzugte Anwendungsbereich dürften jedoch die beschriebenen Durchgangs-Rückschlagventile in Zwischenplatten von Steuerblöcken sein, wobei die vorbeschriebene Lösung eher bei größeren Nenngrößen verwendet wird. Rückschlagventile mit kleinerer Nenngröße können prinzipiell auch mit einer Konstruktion gemäß der DE 10 2004 058 302 A1 ausgeführt sein.

Offenbart sind eine Dichtbuchsenanordnung und eine hydraulisches Gerät oder ein hydraulisches Ventil mit einer derartigen Dichtbuchsenanordnung. Diese hat an einer Stirnfläche eine Ringdichtfläche, die in Anlage an einer Dichtkante steht.

### Bezugszeichenliste:

- 1: Mobilsteuerblock
- 2: Platte
- 4: Gegenplatte
- 6: Rückschlagventil
- 8: Ausgangskanal
- 10: Schließkörper
- 12: Kegel
- 14: Ventilsitz
- 16: Innenbohrung
- 18: Schrägbohrung
- 20: Ringraum
- 22: Ventilbohrung
- 24: Anlageschulter
- 26: Dichtbuchse
- 28: vordere Stirnfläche
- 30: rückseitige Stirnfläche
- 32: Feder
- 34: Radialschulter
- 36: Dichtbuchsenbohrung
- 38: Erhöhung
- 40: Dichtrippe
- 42: Dichtring
- 44: kuppelförmiger Abschnitt
- 45: Ringnut
- 46: Ringdichtfläche
- 48: Dichtkante
- 50: Einführfase
- 52: Außenumfangsabschnitt
- 54: Kante

## Patentansprüche

1. Dichtbuchsenanordnung umfassend eine Ventilbohrung (22) mit einer Anlageschulter (24), sowie umfassend eine aus Kunststoff bestehende Dichtbuchse (26) zum Einsetzen in die Ventilbohrung (22) eines Druckmittelkanals (8, 22) eines Gehäuses (2, 4), wobei an der Dichtbuchse (26) an einer ersten Stirnseite (30) eine in Axialrichtung vorstehende Erhöhung (38) ausgebildet ist, die in dichtende Anlage an eine Axialschulter (4) des Gehäuses bringbar ist und wobei eine gegenüberliegende zweite Stirnseite (28) mit Vorspannung dichtend in Anlage an der Anlageschulter (24) steht, **dadurch gekennzeichnet, dass** im Bereich einer Außenumfangskante der zweiten Stirnseite (28) eine zur Dichtbuchsenachse schräg angestellte Ringdichtfläche (46) ausgebildet ist, die an einer umlaufenden Dichtkante (48) der Anlageschulter (24) anliegt.

2. Dichtbuchsenanordnung nach Patentanspruch 1, wobei sich umfangsseitig an die Ringdichtftäche (46) eine umlaufende Einführfase (50) anschließt.

3. Dichtbuchsenanordnung nach Patentanspruch 1 oder 2, wobei die Vorspannung derart gewählt ist, dass die Ringdichtfläche (46) und/oder die Dichtkante (48) deformiert sind.

4. Dichtbuchsenanordnung nach Patentanspruch 2, wobei ein sich an die Einführfase (50) anschließender Außenumfangsabschnitt (52) der Dichtbuchse (26) schräg gegenüber der gehäuseseitigen Umfangswandung angestellt ist.

5. Dichtbuchsenanordnung nach einem der vorhergehenden Patentansprüche, wobei an der von der Ringdichtfläche entfernten Stirnseite (30) ein Dichtring (42) derart angeordnet ist, dass der Anlagebereich zwischen Dichtkante (48) und Ringdichtfläche (46) in Axialrichtung etwa mit dem Dichtring (42) fluchtet.

6. Dichtbuchsenanordnung nach Patentanspruch 2 oder einen der auf diesen zurückbezogenen Ansprüche, wobei die Radialerstreckung der Ringdichtfläche (46) größer als die Radialerstreckung der Einführfase (50) ist.

7. Hydraulisches Gerät oder hydraulisches Ventil mit einer Dichtbuchsenanordnung nach einem der vorhergehenden Patentansprüche.

## Claims

1. Sealing bushing arrangement comprising a valve bore (22) with a bearing shoulder (24), and comprising a sealing bushing (26) which is composed of plastic for insertion into the valve bore (22) of a pressure medium duct (8, 22) of a housing (2, 4), an elevation (38) which projects in the axial direction being configured on the sealing bushing (26) on a first end side (30), which elevation (38) can be brought into sealing contact with an axial shoulder (4) of the housing, and an opposite second end side (28) being sealingly in contact with the bearing shoulder (24) with prestress, **characterized in that** an annular sealing face (46) which is set obliquely with respect to the sealing bushing axis is configured in the region of an outer circumferential edge of the second end side (28), which annular sealing face (46) bears against a circumferential sealing edge (48) of the bearing shoulder (24).

2. Sealing bushing arrangement according to Patent Claim 1, a circumferential insertion bevel (50) adjoining the annular sealing face (46) on the circumferential side.

3. Sealing bushing arrangement according to Patent Claim 1 or 2, the prestress being selected in such a way that the annular sealing face (46) and/or the sealing edge (48) are/is deformed.

4. Sealing bushing arrangement according to Patent Claim 2, an outer circumferential section (52) of the sealing bushing (26) which adjoins the insertion bevel (50) being set obliquely with respect to the housing-side circumferential wall.

5. Sealing bushing arrangement according to one of the preceding patent claims, a sealing ring (42) being arranged on the end side (30) which is remote from the annular sealing face, in such a way that the bearing region between the sealing edge (48) and the annular sealing face (46) is aligned in the axial direction approximately with the sealing ring (42).

6. Sealing bushing arrangement according to Patent Claim 2 or one of the claims which refer back thereto, the radial extent of the annular sealing face (46) being greater than the radial extent of the insertion bevel (50).

7. Hydraulic unit or hydraulic valve having a sealing bushing arrangement according to one of the preceding patent claims.

## Revendications

1. Agencement de douille d'étanchéité comprenant un alésage de soupape (22) avec un épaulement d'appui (24) et comprenant une douille d'étanchéité (26) constituée de plastique pour l'insertion dans l'alésage de soupape (22) d'un canal de fluide sous pression (8, 22) d'un boîtier (2, 4), un rehaussement (38) saillant dans la direction axiale étant réalisé au niveau de la douille d'étanchéité (26) au niveau d'un premier côté frontal (30), le rehaussement pouvant être amené en appui hermétique contre un épaulement axial (4) du boîtier et un deuxième côté frontal opposé (28) étant hermétiquement en appui, avec précontrainte, contre l'épaulement d'appui (24), **caractérisé en ce que** dans la région d'une arête périphérique extérieure du deuxième côté frontal (28) est réalisée une surface d'étanchéité annulaire (46) inclinée obliquement par rapport à l'axe de la douille d'étanchéité, laquelle s'applique contre une arête d'étanchéité périphérique (48) de l'épaulement d'appui (24).

2. Agencement de douille d'étanchéité selon la revendication 1, dans lequel un biseau d'introduction périphérique (50) se raccorde du côté de la périphérie à la surface d'étanchéité annulaire (46).

3. Agencement de douille d'étanchéité selon la revendication 1 ou 2, dans lequel la précontrainte est choisie de telle sorte que la surface d'étanchéité annulaire (46) et/ou l'arête d'étanchéité (48) soi(en)t déformée(s).

4. Agencement de douille d'étanchéité selon la revendication 2, dans lequel une portion périphérique extérieure (52) de la douille d'étanchéité (26) se raccordant au biseau d'introduction (50) est inclinée obliquement par rapport à la paroi périphérique du côté du boîtier.

5. Agencement de douille d'étanchéité selon l'une quelconque des revendications précédentes, dans lequel une bague d'étanchéité (42) est disposée au niveau du côté frontal (30) éloigné de la surface d'étanchéité annulaire de telle sorte que la région d'appui entre l'arête d'étanchéité (48) et la surface d'étanchéité annulaire (46) soit approximativement en affleurement avec la bague d'étanchéité (42) dans la direction axiale.

6. Agencement de douille d'étanchéité selon la revendication 2 ou l'une des revendications se rapportant à celle-ci, dans lequel l'étendue radiale de la surface d'étanchéité annulaire (46) est supérieure à l'étendue radiale du biseau d'introduction (50).

7. Appareil hydraulique ou soupape hydraulique comprenant un agencement de douille d'étanchéité selon l'une quelconque des revendications précédentes.
